**Europäisches Patentamt**

**European Patent Office**

**Office européen des brevets**

(19)

(11) Veröffentlichungsnummer : **0 470 069 A1**

## (12) EUROPÄISCHE PATENTANMELDUNG

(21) Anmeldenummer : **91890168.7**

(22) Anmeldetag : **30.07.91**

(51) Int. Cl.$^5$ : **B27B 29/00, B27B 31/06,** // B27B31/00, B27B29/10, B27B5/04

(30) Priorität : **30.07.90 AT 1596/90**

(43) Veröffentlichungstag der Anmeldung : **05.02.92 Patentblatt 92/06**

(84) Benannte Vertragsstaaten : **AT BE CH DE DK ES FR GB GR IT LI SE**

(71) Anmelder : **Payr, Hans** **Graben 1** **A-9560 Feldkirchen Poitschach, (Kärnten) (AT)**

(72) Erfinder : **Payr, Hans** **Graben 1** **A-9560 Feldkirchen Poitschach, (Kärnten) (AT)**

(74) Vertreter : **Beer, Manfred, Dipl.-Ing. et al** **Lindengasse 8** **A-1070 Wien (AT)**

(54) **Vorrichtung zum Teilen von Holz.**

(57)    Eine Vorrichtung zum Nachschneiden von Holz (Modeln) besitzt eine in der Schnittebene (11) hin- und herbewegbare (Doppelpfeil 7) Kreissäge (6) und mehrere Spannböcke (1) zum Halten des zu zerteilenden Holzstückes, die senkrecht zur Schnittebene (11) verstellbar sind, um die Schnittlage einzustellen. Weiters sind Auflager (3) für das Holz vorgesehen, wobei die unteren Spannbacken (2) der Spannböcke (1) unter die Auflager (3) absenkbar sind. Die Säge (6) ist für Vor- und Rückschnitt eingerichtet, so daß bei jedem Hub derselben ein Schnitt ausgeführt werden kann. Zum Zuführen der zu zerteilenden Holzstücke sind Schrägförderbänder (13) vorgesehen, welche die Holzstücke auf Hubtische (12) ablegen, die diese dann auf die Auflager (3) für das Holz ablegen.

EP 0 470 069 A1

Fig. 2

Die Erfindung betrifft eine Vorrichtung zum Teilen von Holz, insbesondere zum Nachschneiden von vorgeschnittenem Holz, mit einer Einrichtung zum Halten des Holzes und mit einer Säge, die zum Ausführen der Teilarbeit parallel zur Lärgserstreckung des Holzes verschiebbar ist, wobei die Einrichtung zum Halten des Holzes zum Einstellen der Schnittlage quer zur Bewegungsrichtung der Säge verstellbar ist, und Spannböcke mit je zwei Spannbacken, die von oben und von unten her am Holz angreifen, aufweist.

Derartige Vorrichtungen werden vorwiegend zum Nachschneiden von vorgeschnittenem Holz (Modeln) verwendet. Die für das Nachschneiden verwendeten Sägen können Kreissägen oder Bandsägen sein und sind bei bekannten Vorrichtungen ortsfest montiert. Bei bekannten Vorrichtungen ist es die Einrichtung zum Halten des zu teilenden Holzes, die zum Ausrichten des Holzes gegenüber der Säge (Einstellen der Schnittlage) quer zur Längserstreckung des Holzes, d.h. quer Richtung des Schnittes verstellbar und zusätzlich in Richtung des Holzes zum Ausführen der Sägearbeit beweglich ist. Diese zweifache Beweglichkeit der Halteeinrichtung bietet nicht nur konstruktive Nachteile, da die Einrichtung zum Halten des Holzes in zwei Richtungen beweglich sein muß, sondern weist auch den Nachteil auf, daß die Bedienungsperson der Vorrichtung das zu bearbeitende Holzstück vor sich nicht in Ruhe sieht und daher nur schwer beobachten kann, wie das Holzstück mit möglichst geringem Verschnitt zerteilt werden kann.

Aus der EP-A 55 793 ist es bekannt, Holzbretter beim Besäumen derselben in einer Vorrichtung ausgerichtet festzuhalten und das zum Besäumen vorgesehene Werkzeug (Säge oder Fräse) bei stillstehendem Brett zu bewegen. Zum Fixieren des Brettes in der Vorrichtung sind mehrere von oben gegen einen Tisch vorschiebbare Druckstempel vorgesehen.

Aus der US-A 4 348 924 ist eine Vorrichtung zum Besäumen der Ränder von mehrlagigen, plattenförmigen Werkstücken bekannt, bei welchen Werkstücken die beiden äußeren Lagen über den Rand der mittleren Lage vorstehen. Um das Werkstück festzuhalten ist eine Klemmvorrichtung vorgesehen, die mit zwei Klemmbacken ausgestattet ist, wobei die Klemmbacken jeweils von oben bzw. von unten her am Werkstück angreifen und dieses festhalten. Die Klemmvorrichtung für das Werkstück ist auf nicht näher gezeigte Art und Weise mit Hilfe eines Motors gegenüber der Schnittebene der Säge verstellbar. Die Säge wird für die Besäumarbeit relativ zum stillstehenden Werkstück bewegt.

Der Erfindung liegt die Aufgabe zugrunde, eine Vorrichtung der eingangs genannten Gattung anzugeben, welche die geschilderten Nachteile nicht aufweist und die insbesondere einfach zu bedienen ist.

Erfindungsgemäß wird diese Aufgabe dadurch gelöst, daß die Säge, die auf einer ortsfesten Führung geführt ist, eine nach zwei Seiten wirksame Säge ist, daß die Einrichtung zum Halten des Holzes Gleitführungen für die Spannböcke und Auflager für das Holz aufweist, und daß die unteren Spannbacken, die an den Spannböcken gelagert sind, durch Ausnehmungen unter die Auflager versenkbar sind.

Durch die Erfindung ergibt sich einmal der Vorteil, daß Leerhübe vermieden sind, weil bei jedem Hub, d.h. beim Hin- und Rückhub der Säge ein Schneidevorgang (Teilarbeit) bzw. ein Nachschneidevorgang ausgeführt werden kann.

Die erfindungsgemäße Vorrichtung zum Teilen von Holz ist auch insoferne vorteilhaft, als sie wenig Raum beansprucht. Weiters ist es möglich, Holz der Einrichtung zum Halten des Holzes seitlich zuzuführen, so daß eine Bedienungsperson auch einen guten Überblick über die Arbeitsfläche, d.h. den Arbeitsbereich hat.

Bei der erfindungsgemäßen Vorrichtung steht das Holz beim Ausführen der Schneidarbeit still und die Säge bewegt sich relativ zum zu teilenden Holzstück. Dadurch ist nicht nur die Konstruktion der Vorrichtung vereinfacht, sondern auch der Raumbedarf der Vorrichtung ist insgesamt verkleinert.

Vorteilhafte weitere Ausbildungen der Erfindung sind Gegenstand der Unteransprüche.

Weitere Einzelheiten und Merkmale der Erfindung ergeben sich aus der nachstehenden Beschreibung bevorzugter Ausführungsbeispiele, in der auf die angeschlossenen Zeichnungen Bezug genommen wird.

Es zeigt:
Fig. 1 eine Vorrichtung zum Nachschneiden von vorgeschnittenem Holz in Seitenansicht,
Fig. 2 eine Draufsicht auf die Vorrichtung von Fig. 1,
Fig. 3 schematisch eine bei der erfindungsgemäßen Vorrichtung verwendbare Säge,
Fig. 4 eine weitere Ausführungsform der Spannböcke und
Fig. 5 eine andere Ausführungsform einer Säge.

Die Vorrichtung dient zum Teilen von Holz, insbesondere zum Nachschneiden von vorgeschnittenem Holz. Wird die erfindungsgemäße Vorrichtung als Nachschnittsäge verwendet, können aus vorgemodeltem Holz Fensterkantel, Lamellen, Latten usw. hergestellt werden. Auch die Erzeugung von Hoblern (zum Hobeln bestimmte Holzstücke), ist mit der erfindungsgemäßen Vorrichtung möglich. Diese kann aber auch als Säge zum Besäumen von Blochen verwendet werden.

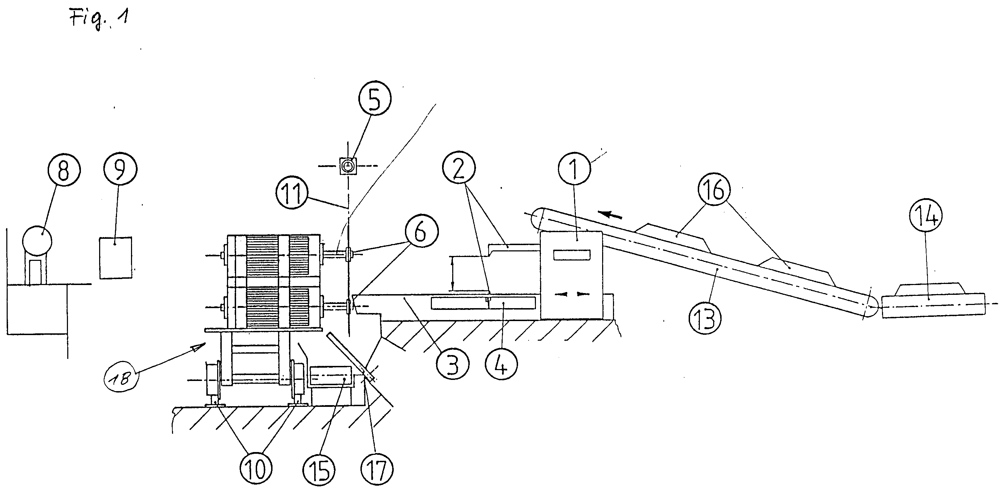

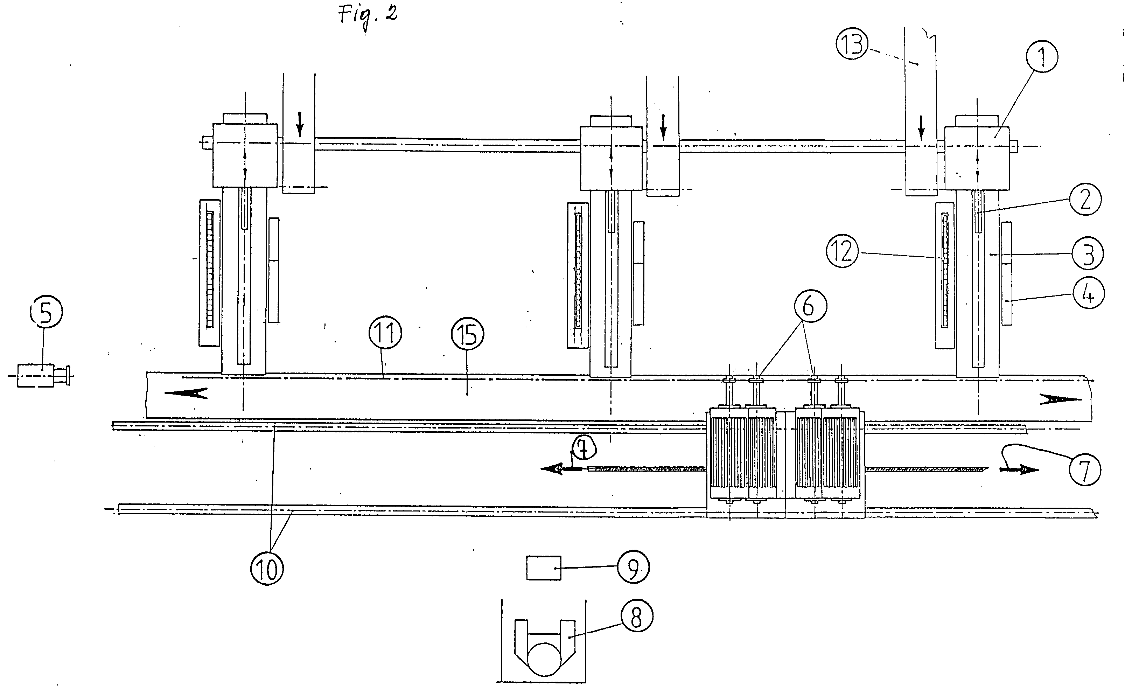

Die Vorrichtung besitzt eine Einrichtung zum Halten des zu teilenden Holzes, mit mehreren - im gezeigten Ausführungsbeispiel drei - Spannböcken 1, die jeweils zwei Spannbacken 2 besitzen. Die Spannbacken 2 sind bei der in Fig. 1 und 2 gezeigten Ausführungsform durch einen nicht näher gezeigten, in den Spannböcken 1 untergebrachten Antrieb zum Festklemmen des zu teilenden Holzes aufeinanderzu und voneinander weg verschschiebbar.

Die Spannböcke 1 sind auf an Auflagern 3 für das zu bearbeitende Holz vorgesehenen Gleitschienen in der Zeichenebene von Fig. 1 bzw. parallel dazu verstellbar.

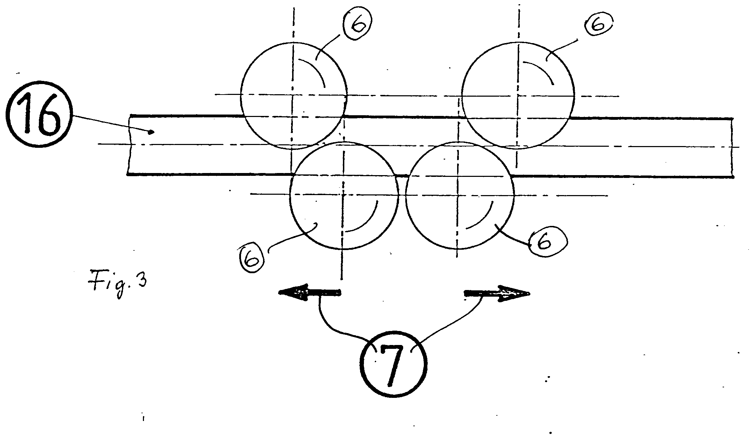

Den Spannböcken 1 gegenüberliegend ist im in den Fig. 1 und 2 gezeigten Ausführungsbeispiel der erfindungsgemäßen Vorrichtung eine Kreissäge 6 mit vier Sägeblättern, deren Anordnung in Fig. 3 gezeigt ist, angeordnet. Die Kreissäge 6 ist parallel zur Schnittebene 11, d.h. senkrecht zur Bildebene von Fig. 1, beweglich und ist hiezu auf einem Wagen 18 montiert, der auf Führungsschienen 10 verfahrbar ist. Die Bewegung des Wagens 18 kann durch Endschalter geregelt werden.

Die Sägeblätter der Kreissäge 6 sind für Vor- und Rückschnitt ausgebildet, so daß bei jedem Hub der Kreissäge 6 ein Schnitt ausgeführt werden kann.

Unter der Kreissäge 6 ist ein Förderband 15 für Linksund Rechtslauf angeordnet, über das die nach der Teilarbeit anfallenden Holzstücke, wie Latten, Hobler, Kanthölzer u. dgl. abtransportiert werden können. Durch die Möglichkeit, das Förderband 15 wahlweise in der einen oder in der anderen Richtung zu bewegen, kann eine Vorsortierung der in der erfindungsgemäßen Vorrichtung erzeugten Holzstücke ausgeführt werden.

Über dem Förderband 15 ist noch eine Klappe 17 vorgesehen, die um eine parallel zur Schnittebene 11 verlaufende horizontale Achse verschwenkbar ist. In der in Fig. 1 eingezeichneten Schwenklage fallen die abgetrennten Holzstücke nicht auf das Förderband 15, sondern werden seitlich abgelenkt. So können beispielsweise Schwarten von der Hauptware getrennt werden. Wenn dies nicht notwendig ist, wird die Klappe 17 in eine senkrechte Stellung hochgeklappt. Hiezu ist ein nicht näher gezeigter Antrieb, z.B. ein Druckmittelmotor od. dgl. vorgesehen. Bei hochgeschwenkter Klappe 17 fallen die Holzstücke auf das Förderband 15.

Für den Abtransport der Sägespäne kann ebenfalls ein Förderband, z.B. das Förderband 15, vorgesehen sein.

Für das Zuführen der in der erfindungsgemäßen Vorrichtung zu teilenden Holzstücke 16 sind mehrere Zubringförderbänder 13 vorgesehen, die bis über die Spannböcke 1 ragen und denen die Holzstücke 16 über einen z.B. als Rollengang 14 ausgeführten Längsförderer zugeführt werden können.

Wie insbesondere aus Fig. 2 ersichtlich, ist neben jedem Auflager 3 mit Gleitschienen für die Spannböcke 1 ein Hubtisch 12 vorgesehen, der aus einer unter die Auflager 3 abgesenkten Ruhestellung bis zum abgabeseitigen Ende der Zubringförderer 13 angehoben werden kann. Jeder Hubtisch 12 ist weiters mit einer Förderkette ausgestattet, mit der die vom Zubringförderer 13 übernommenen Holzstücke 16 bewegt werden können. Bei ausgefahrenem Hubtisch 12 sind die Spannbacken 2 automatisch eingefahren.

Nachdem die Holzstücke 16 durch Absenken der Hubtische 12 auf die Auflager 3 abgesenkt worden sind, werden die Spannböcke 1 mit geöffneten Spannbacken 2 vorgeschoben und das Holzstück 16 durch Betätigen der Spannbacken 2 festgeklemmt.

Das Ausrichten des so festgehaltenen Holzstückes 16 gegenüber der Schnittebene 11 der Kreissäge 6 erfolgt ebenfalls durch Bewegen der Spannböcke 1, wobei eine Visiereinrichtung, bestehend aus einer Kamera 5 und einem Monitor 9, der am Arbeitsplatz einer Bedienungsperson 8 angeordnet ist, vorgesehen sein kann. Die Visiereinrichtung kann eine mit Vorrichtung mit Anzeige der Schnittlinie auf dem Bildschirm 9 sein, wie sie aus der Zeitschrift "HOLZ KURIER", 45. Jahrgang, Nr. 24, S. 12 - 14 (14. Juni 1990) bekannt ist. Diese als "Optiline" bezeichnete Schnittlinienanzeigevorrichtung zeichnet sich dadurch aus, daß am Bildschirm 9 in dem von der Kamera 5 aufgenommenen Bild eine Linie erzeugt wird, die der Schnittebene 11 entspricht, so daß das Holzstück 16 von der Bedienungsperson 8 durch Bewegen der Spannböcke 1 und/oder der Spannbacken 2 gegenüber der Schnittlinie 11 genau ausgerichtet werden kann, so daß eine optimale Ausnutzung des Holzes möglich ist.

In der erfindungsgemäßen Vorrichtung sind neben jedem Auflager 3 mit den Gleitschienen für die Spannböcke 1 noch Vorrichtungen 4 zum Wenden von Holzstücken vorgesehen, die einen beweglichen Arm aufweisen. Wenn ein Holzstück 16 gewendet werden soll, wird es von den Spannbacken 2 der Spannböcke 1 freigegeben und die Wendeeinrichtung 4 (Prismenwender) betätigt. Hierauf werden die Spannbacken 2 wieder betätigt und das gewendete Holzstück festgehalten.

Mit der beschriebenen erfindungsgemäßen Vorrichtung kann beispielsweise aus vorgemodeltem Rundholz Hauptware herausgeschnitten werden. Dabei ist eine einwandfreie Qualitätsbeurteilung und eine kurzfristige Änderung des Einschnittes möglich.

Auch für die Produktion von Fensterkanteln (astarmes Holz) ist die erfindungsgemäße Vorrichtung mit Vorteil einsetzbar, da wegen des ruhenden Werkstückes (keine seitlichen Bewegungen wie bei den bekannten Vorrichtungen) eine beste Qualitätsbeurteilung möglich ist.

Die Positionierung der Spannböcke 1 zur Schnittstärkeneinstellung kann mechanisch erfolgen, wird aber vorzugsweise elektronisch gesteuert ausgeführt. Beispielsweise erfolgt der Ablauf der Auftrennung des Holzstückes (vorzugsweise der Model) vollautomatisch, wobeinach einem Programm positioniert, dann geschnitten, dann erneut positioniert, dann wieder geschnitten usw. wird, wobei bei Hub der Kreissäge 6 in jeder Richtung des Doppelpfeiles 7 von Fig. 2 ein Schnitt ausgeführt wird.

Dank der Prismenwender 4 kann das zu bearbeitende Holz 16 schnell gewendet werden. Auf diese Weise kann auch von bereits weitgehend beschnittenen Holzstücken, die nur mehr relativ dünn sind, noch brauchbares Holz (Hauptware) abgesägt werden. Dabei kann so vorgegangen werden, daß nach dem Abschneiden der ersten Schwarte auf der einen Seite des Models dieses gewendet und mit der soeben beschnittenen Seite den Spannböcken 1 zugekehrt von den Spannbacken 2 festgehalten wird. Der Verschnitt wird auf diese Weise sehr klein gehalten.

Es versteht sich, daß an Stelle der im gezeigten Ausführungsbeispiel verwendeten Doppelwellenkreissägeblätter auch Einwellenkreissägeblätter verwendet werden können. Überhaupt sind bei der erfindungsgemäßen Vorrichtung beliebige Sägen einsetzbar.

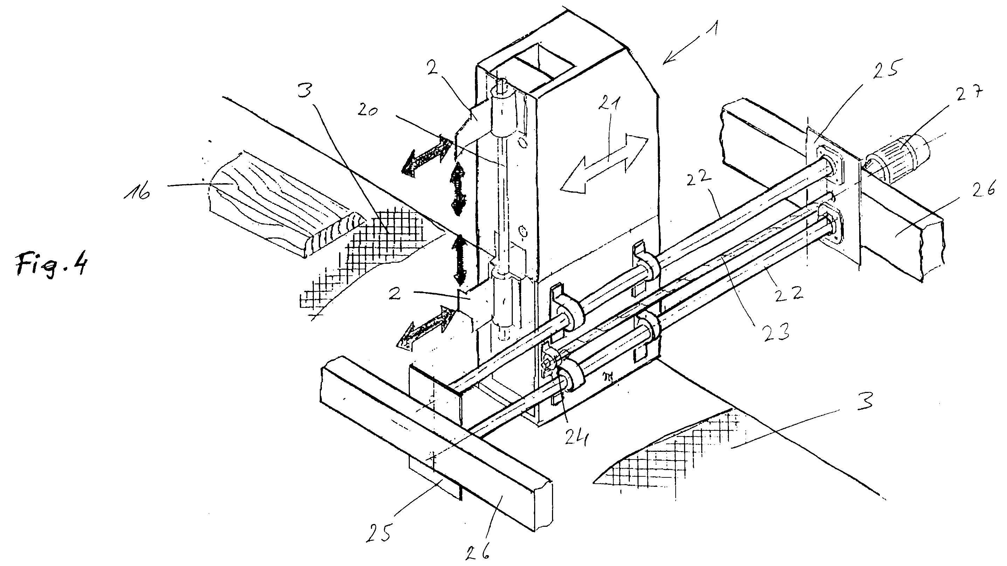

In Fig. 4 ist eine Ausführungsform eines Spannbockes 1 dargestellt, bei welchem die Spannbacken 2 verschiebbar im Spannbock 1 geführt sind und von einer Gewindespindel 20 gegengleich angetrieben werden.

Der Spannbock 1 ist in Richtung des Doppelpfeiles 21 quer zur Bewegungsrichtung der Säge 6 verschiebbar und auf einem Paar von Führungsstangen 22 verschiebbar gelagert.

Der Antrieb des Spannbockes 1 erfolgt über eine Gewindespindel 23, die mit einer am Spannbock 1 befestigten Mutter 24 zusammenwirkt. Die Führungsstangen 22 sind über Befestigungsplatten 25 zu beiden Seiten an Trägern 26 befestigt.

Die Gewindespindel 23 ist durch eine Befestigungsplatte 25 und einen Träger 26 durchgeführt und an einen Motor 27 (Schrittmotor) angekuppelt, der die Gewindespindel 23 antreibt.

Die Spannböcke 1 können sowohl bei der in Fig. 1 und 2 als auch bei der in Fig. 4 gezeigten Ausführungsform mit einem Hydraulikmotor oder einem elektrischen Getriebemotor verstellt werden. Hiezu kann eine gemeinsame vom Motor angetriebene Welle vorgesehen sein, die über endlose Ketten die Spannböcke quer zur Schnittebene 11 (gemeinsam) verstellt.

Die Bewegungen der Spannböcke 1 und/oder ihrer Spannbakken können auch mit Hilfe von Pneumatikoder Hydraulikzylindern ausgeführt werden.

Gemäß der Erfindung kann vorgesehen sein, daß der Spannbock 1 als ganzes zwischen Auflagern 3 für das Holz geführt ist, oder es kann gemäß einer weiteren Ausführungsform vorgesehen sein, daß die Spannböcke 1 nur bis zu den Auflagern 3 vorschiebbar sind, wobei lediglich die untere Spannbacke 2 in der vorgeschobenen Stellung des Spannbockes 1 in eine Ausnehmung in den Auflagern 3 für das Holz versenkbar ist. Die Auflager 3 sind in Fig. 4 nur schematisch angedeutet.

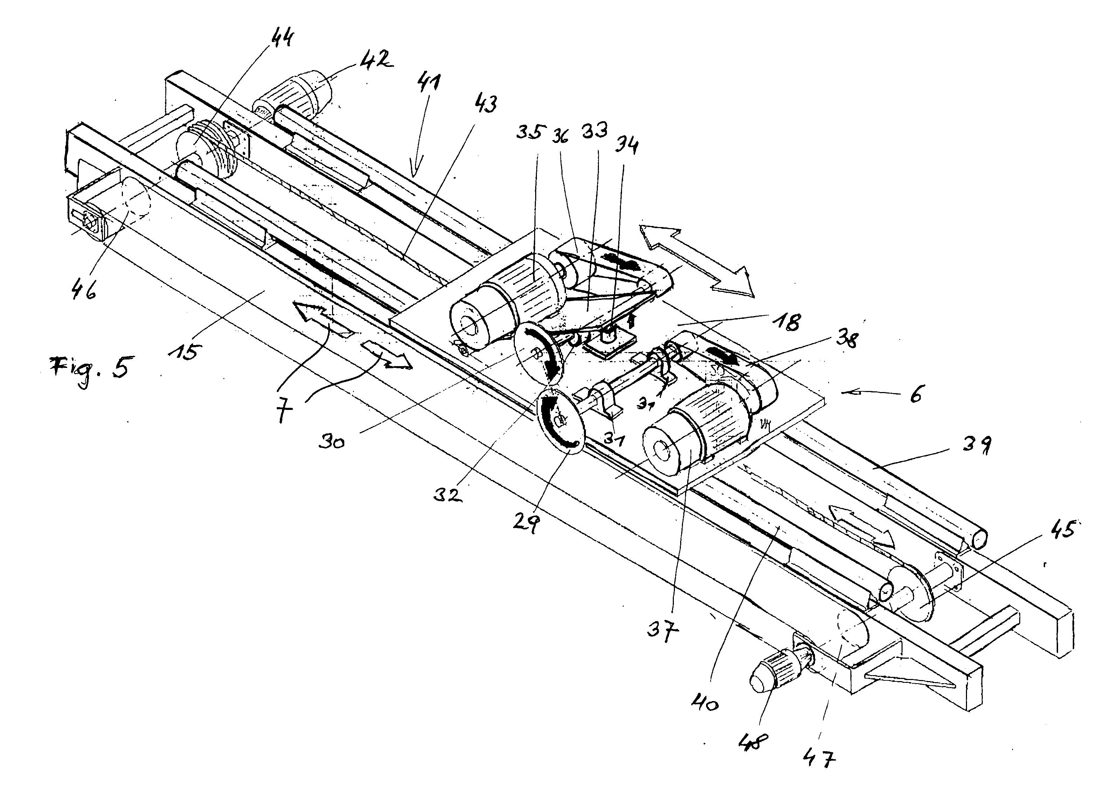

In Fig. 5 ist eine zweiwellige Ausführungsform einer Säge 6 dargestellt. Von den beiden Sägen 29 und 30 der Säge 6 ist eine Säge 29 über zwei Lagerböcke 31 am Kreissägewagen 18 befestigt. Die zweite Säge 30 ist über zwei Lagerböcke 32 an der Unterseite einer Wippe 33 befestigt. Die Wippe 33 kann über eine Verstelleinrichtung, z.B. einen Druckmittelzylinder 34, der im Bereich des freien Endes der Wippe 33 angreift, in ihrer Höhe verstellt werden.

An ihrem von den Lagerböcken 32 für die Säge 30 entfernten Ende ist die Wippe 33 über ein Gelenk am Wagen 18 befestigt. An der Wippe 33 ist weiters ein Antriebsmotor 35 für die Säge 30 angeordnet, welcher mit der Wippe 33 mitgeschwenkt wird. Der Antrieb der Säge 30 durch den Motor 35 erfolgt über einen Riemen 36. Der Riemen 36 kann natürlich auch durch äquvalente Mittel, wie z.B. Ketten od.dgl., ersetzt werden, bzw. kann der Motor die Kreissägewelle direkt oder über ein Getriebe antreiben.

Zum Antrieb der Säge 29 ist ein Motor 37 vorgesehen, der die Säge 29 ebenfalls über einen Riemen 38 od.dgl. antreibt. Der Motor 37 ist am Wagen 18 ortsfest angeordnet.

Durch die Verschwenkbarkeit der Säge 30 über die Wippe 33 ist es auf einfache Weise möglich den Abstand der beiden Sägen 29, 30 zueinander zu verändern und die Säge 6 somit an die jeweiligen Erfordernisse anzupassen.

Der Wagen 18 ist bei dem in Fig. 5 dargestellten Ausführungsbeispiel auf Führungsstangen 39 und 40 geführt, die an einem Rahmen 41 angeordnet sind. Zum Antrieb des Wagens 18 ist ein Motor 42 vorgesehen, welcher einen mit dem Kreissägewagen verbundenen Seilzug 43 antreibt, der über zwei Umlenkrollen 44, 45 am Rahmen 41 geführt ist.

Weiters ist neben dem Rahmen 41 noch ein Förderband 15 vorgesehen, das über zu den Umlenkrollen 44, 45 für den Seilzug 43 koaxial angeordnete Umlenkrollen 46 und 47 geführt und von einem Motor 48 angetrieben wird. Über das Förderband 15 könne die nach der Teilarbeit anfallenden Holzstücke, wie Latten, Hobler u.dgl., abtransportiert werden.

Das Zuführen von zu bearbeitendem Holz kann auch über heb- und senkbare Förderwalzen, die zwischen den Auflagern 3 angeordnet sind von links oder von rechts her erfolgen.

Es ist auch möglich, die Schrägförderer 13 verschwenkbar auszubilden und so lang zu machen, daß sie zwischen den Spannböcken 1 bis zu den Auflagern 3 reichen. Bei dieser Ausführungsform sind die Hubtische 12 entbehrlich, da so gearbeitet werden kann, daß die Schrägförderer 13 mit einem an ihren freien Endbereichen liegenden Holzstück 16 abgesenkt werden und so das Holzstück 16 auf die Auflager 3 ablegen.

Zum Verstellen der Spannböcke 1 können auch Ritzel-Zahnstangenantriebe vorgesehen sein. Diese Antriebe können gemeinsam oder voneinander unabhängig sein.

Die Auflage 3 für das zu bearbeitende Holz 16 kann bei der erfindungsgemäßen Vorrichtung sehr breit (bis zu 1000 mm) sein, so daß auch unförmiges Holz 16, d.h. Holz mit sehr unregelmäßig verlaufenden Seitenrändern sparsam und optimal (geringer Verschnitt) bearbeitet werden kann.

**Patentansprüche**

1. Vorrichtung zum Teilen von Holz, insbesondere zum Nachschneiden von vorgeschnittenem Holz (16), mit einer Einrichtung zum Halten des Holzes (16) und mit einer Säge (6), die zum Ausführen der Teilarbeit parallel zur Längserstreckung des Holzes (16) verschiebbar (Pfeil 7) ist, wobei die Einrichtung zum Halten des Holzes (16) zum Einstellen der Schnittlage quer zur Bewegungsrichtung (Pfeil 7) der Säge (6) verstellbar ist, und Spannböcke (1) mit je zwei Spannbacken (2), die von oben und von unten her am Holz (16) angreifen, aufweist, dadurch gekennzeichnet, daß die Säge (6), die auf einer ortsfesten Führung (10, 41) geführt ist, eine nach zwei Seiten wirksame Säge (6) ist, daß die Einrichtung zum Halten des Holzes (16) Gleitführungen (22) für die Spannböcke (1) und Auflager (3) für das Holz (16) aufweist, und daß die unteren Spannbacken (2), die an den Spannböcken (1) gelagert sind, durch Ausnehmungen unter die Auflager (3) versenkbar sind.

2. Vorrichtung nach Anspruch 1, dadurch gekennzeichnet, daß ein Arbeitsplatz für eine Bedienungsperson und ein Bildschirm (9) für die Einstellung der Schnittebene (11) neben der Bewegungsbahn für die Säge (6) auf der der Einrichtung zum Halten des Holzes gegenüberliegenden Seite vorgesehen ist.

3. Vorrichtung nach Anspruch 1, dadurch gekennzeichnet, daß die Gleitführungen (22) für die Spannböcke (1) durch Führungsstangen gebildet werden.

4. Vorrichtung nach einem der Ansprüche 1 bis 3, dadurch gekennzeichnet, daß der Antrieb zum Verschieben der Spannböcke (1) durch eine von einem Motor (27) angetriebene Gewindespindel (23) gebildet ist.

5. Vorrichtung nach einem der Ansprüche 1 bis 4, dadurch gekennzeichnet, daß die Spannbacken (2) verschwenkbar an den Spannbacken (1) gelagert sind.

6. Vorrichtung nach einem der Ansprüche 1 bis 4, dadurch gekennzeichnet, daß die Spannbacken (2) über eine Gewindespindel (20) angetrieben, verschiebbar an den Spannböcken (1) geführt sind.

7. Vorrichtung nach einem der Ansprüche 1 bis 6, dadurch gekennzeichnet, daß als Säge eine zweiseitig gezahnte Bandsäge vorgesehen ist.

8. Vorrichtung nach einem der Ansprüche 1 bis 7, dadurch gekennzeichnet, daß als Säge (6) eine Kreissäge für Vor- und Rückschnitt vorgesehen ist.

9. Vorrichtung nach Anspruch 8, dadurch gekennzeichnet, daß die Kreissäge (6) ein- bis vierwellig ausgeführt ist.

10. Vorrichtung nach Anspruch 9, dadurch gekennzeichnet, daß bei Anordnung einer vierwelligen Kreissäge (6) die vier Sägeblätter der Kreissäge (6) in einer Ebene angeordnet sind und daß ein Sägenpaar einen größeren Abstand voneinander aufweist als das zweite Sägen-paar, wobei die Sägeblätter des näher aneinander angeordneten Sägepaares zwischen die Sägeblätter des weit auseinanderliegenden Kreissägepaares eingreifen (Fig. 3).

11. Vorrichtung nach Anspruch 9, dadurch gekennzeichnet, daß die Kreissäge (6) zweiwellig ausgebildet ist und daß eine Säge (30) auf einer verstellbar gelagerten Wippe (33) und die zweite Säge (29) ortsfest am Kreissägenwagen (18) der Säge (6) gelagert ist.

12. Vorrichtung nach Anspruch 11, dadurch gekennzeichnet, daß die Sägen (29, 30) über Riemenantriebe (36, 38) od.dgl. von Motoren (35, 37) angetrieben werden.

13. Vorrichtung nach einem der Ansprüche 1 bis 12, dadurch gekennzeichnet, daß zum Zuführen von zu teilendem, insbesondere nachzuschneidendem Holz (16) (Modeln) eine Einrichtung (13) vorgesehen ist, die das Holz (16) quer zur Bewegungsrichtung der Säge (6) bewegt.

14. Vorrichtung nach Anspruch 13, dadurch gekennzeichnet, daß die Einrichtung (13) zum Zuführen von Holz einen Längsförderer (14), der beispielsweise als Rollengang ausgebildet ist, und wenigstens zwei vom Längsförderer (14) schräg über die Spannböcke (1) führende Querförderer (13) aufweist und daß neben jedem Auflager (3) anhebbare Hubtische (12) vorgesehen sind, die aus einer unter die Auflager (3) abgesenkten Bereitschaftsstellung in eine Übernahmestellung anhebbar sind, wobei die Hubtische (12) in der Übernahmestellung neben den abgabeseitigen Enden der Querförderer (13) angeordnet sind.

15. Vorrichtung nach einem der Ansprüche 1 bis 14, dadurch gekennzeichnet, daß unter der Säge (6) ein Förderband (15) zum Abtransport der vom Holz abgeschnittenen Stücke, wie Latten, Hobler, Kanteln u. dgl. vorgesehen ist.

16. Vorrichtung nach einem der Ansprüche 1 bis 15, dadurch gekennzeichnet, daß eine Klappe (17) vorgesehen ist, die beispielsweise mit Hilfe eines Druckmittelmotors, um eine parallel zur Förderrichtung des Förderbandes (15) für den Abtransport ausgerichtete Achse über das Förderband (15) ein- und ausschwenkbar ist.

17. Vorrichtung nach einem der Ansprüche 14 bis 16, dadurch gekennzeichnet, daß in Hubtischen (12) ein Förderorgan zur Bewegung des Holzstückes (16) quer zu dessen Längserstreckung vorgesehen ist.

Fig. 1

Fig. 2

Fig. 3

Fig. 4

Fig. 5

EP 0 470 069 A1

Europäisches
Patentamt

# EUROPÄISCHER RECHERCHENBERICHT

Nummer der Anmeldung

EP 91 89 0168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 088 501 (O.D. GOOD et al.) <br> * Spalte 2, Zeilen 9-21; Spalte 3, Zeilen 10-27; Figuren 1-4 * | 1,3,5,7 -9 | B 27 B 29/00 <br> B 27 B 31/06 // <br> B 27 B 31/00 <br> B 27 B 29/10 <br> B 27 B 5/04 |
| A | --- | 4,6 | |
| Y | US-A-3 815 570 (S.M. STORY) <br> * Spalte 7, Zeilen 42-67; Figuren 1,2,9,11,12 * | 1,3,5,7 -9 | |
| A | --- | 4,10 | |
| A | DE-U-8 813 032 (MASCHINENFABRIK BERNHARD BRAUN) <br> * Seite 6, Zeilen 8-20; Schutzansprüche 1-3; Figuren 1-3 * <br> --- | 1-8,13- 16 | |
| A | US-A-4 196 648 (A.U. JONES et al.) <br> * Spalte 8, Zeile 66 - Spalte 9, Zeile 9; Spalte 9, Zeilen 16-32; Spalte 12, Zeile 67 - Spalte 10, Zeile 6; Spalte 15, Zeilen 29-50; Figuren 12-14,19 * <br> --- | 1,5,8- 10,13, 14,17 | |
| A | US-A-4 468 992 (R.W. McGEEHEE) <br> * Spalte 4, Zeilen 41-54; Spalte 5, Zeile 61 - Spalte 6, Zeile 10; Figuren 1,2,8,9 * <br> --- | 1,2,5,8 -11,13, 14,17 | RECHERCHIERTE SACHGEBIETE (Int. Cl.5) <br><br> B 27 B <br> B 23 D <br> B 27 F |
| D,A | HOLZ-KURIER, 45. Jahrgang, Nr. 24, 14. Juni 1990, Seiten 12-14, Wien, AT; "Ein Säger als Erfinder" <br> * Seite 13, Zeilen 5-28; Figuren * <br> --- | 1,2 | |
| A | US-A-4 515 196 (D.W. SHIELDS) <br> * Spalte 4, Zeile 67 - Spalte 5, Zeile 13; Spalte 15, Zeilen 48-58; Figuren 1,2,10,14 * <br> ---        -/- | 1,7,13- 17 | |

Der vorliegende Recherchenbericht wurde für alle Patentansprüche erstellt

| Recherchenort | Abschlußdatum der Recherche | Prüfer |
|---|---|---|
| DEN HAAG | 25-10-1991 | LILIMPAKIS E. |

EPO FORM 1503 03.82 (P0403)

**Europäisches**
**Patentamt**

# EUROPÄISCHER RECHERCHENBERICHT

Nummer der Anmeldung

EP  91 89 0168

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 693 056  (A.R. GAGNE)<br>* Spalte 1, Zeilen 46-58; Figuren 1,3 *<br>--- | 1,8-12 | |
| A | US-A-4 941 382  (T.G. SMITH et al.)<br>* Spalte 2, Zeilen 50-65; Figur 3 *<br>--- | 1,3,5 | |
| A | FR-A- 583 469  (MARQCOL S.A.)<br>* Seite 3, Zeilen 18-22; Figur 6 *<br>----- | 1,5,6 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 25-10-1991 | LILIMPAKIS E. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes
    Dokument

EPO FORM 1503 03.82 (P0403)